(19) Europäisches Patentamt / European Patent Office / Office européen des brevets

(11) **EP 2 476 484 B1**

(12) **EUROPEAN PATENT SPECIFICATION**

(45) Date of publication and mention
of the grant of the patent:
**07.11.2018 Bulletin 2018/45**

(21) Application number: **10815395.8**

(22) Date of filing: **08.09.2010**

(51) Int Cl.:
*C01B 3/40* (2006.01)     *B01J 23/78* (2006.01)
*B01J 29/04* (2006.01)     *B01J 35/10* (2006.01)
*B01J 37/02* (2006.01)     *B01J 37/00* (2006.01)
*B01J 23/755* (2006.01)     *B01J 37/04* (2006.01)
*B01J 21/04* (2006.01)     *B01J 35/00* (2006.01)
*B01J 23/00* (2006.01)     *H01M 8/0612* (2016.01)

(86) International application number:
**PCT/JP2010/065438**

(87) International publication number:
**WO 2011/030800 (17.03.2011 Gazette 2011/11)**

(54) **POROUS CATALYTIC OBJECT FOR DECOMPOSING HYDROCARBON AND PROCESS FOR PRODUCING SAME, PROCESS FOR PRODUCING HYDROGEN-CONTAINING MIXED REFORMED GAS FROM HYDROCARBON, AND FUEL CELL SYSTEM**

PORÖSES KATALYTISCHES OBJEKT ZUR ZERSETZUNG VON KOHLENWASSERSTOFF UND VERFAHREN ZU SEINER HERSTELLUNG, VERFAHREN ZUR HERSTELLUNG EINES WASSERSTOFFHALTIGEN REFORMIERTEN MISCHGASES AUS KOHLENWASSERSTOFF UND BRENNSTOFFZELLENSYSTEM

OBJET CATALYTIQUE POREUX POUR LA DÉCOMPOSITION D'UN HYDROCARBURE ET SON PROCÉDÉ DE PRODUCTION, PROCÉDÉ DE PRODUCTION DE GAZ REFORMÉ MÉLANGÉ CONTENANT DE L'HYDROGÈNE À PARTIR D'UN HYDROCARBURE ET SYSTÈME DE PILE À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.09.2009 JP 2009208440**

(43) Date of publication of application:
**18.07.2012 Bulletin 2012/29**

(73) Proprietor: **Toda Kogyo Corp.**
**Hiroshima 732-0828 (JP)**

(72) Inventors:
• **TAKAHASHI, Shinji**
**Otake-shi**
**Hiroshima 739-0652 (JP)**
• **KOBAYASHI, Naoya**
**Otake-shi**
**Hiroshima 739-0652 (JP)**
• **HISAYUKU, Yurie**
**Otake-shi**
**Hiroshima 739-0652 (JP)**

(74) Representative: **J A Kemp**
**14 South Square**
**Gray's Inn**
**London WC1R 5JJ (GB)**

(56) References cited:
WO-A1-2008/049266     WO-A1-2009/011133
WO-A1-2009/084736     WO-A2-2008/012255
JP-A- 11 276 893     JP-A- 2003 135 967
JP-A- 2003 225 566     JP-A- 2005 224 722
JP-A- 2008 018 414     JP-A- 2008 080 246

• **TAKESHI MIYATA ET AL.: 'Promoting effect of Rh, Pd and Pt noble metals to the Ni/Mg(Al)O catalysts for the DSS-like operation in CH4 steam reforming' APPLIED CATALYSIS A: GENERAL vol. 310, 2006, pages 97 - 104, XP005584880**
• **TAKESHI MIYATA ET AL.: 'Promoting effect of Ru on Ni/Mg(Ai)O catalysts in DSS-like operation of CH4 steam reforming' CATALYSIS COMMUNICATIONS vol. 8, 2003, pages 447 - 451, XP005792464**

**Description**

TECHNICAL FIELD

The present invention aims at providing a catalyst as a porous catalyst body for decomposing hydrocarbons which is less expensive, and has an excellent catalytic activity for decomposition and removal of hydrocarbons, an excellent anti-sulfur poisoning property, a high anti-coking property even under a low-steam condition, a crushing strength and a displacement length which are optimum for DSS operation, and an excellent durability.

In addition, the present invention aims at not only effectively decomposing and removing hydrocarbons but also producing hydrogen by using the above catalyst.

BACKGROUND ART

In recent years, in the consideration of global environmental problems, early utilization techniques for new energies have been intensively studied, and fuel cells or batteries have been noticed as one of these techniques. The fuel cells generally known in the art are classified into a phosphoric acid type (PAFC), a molten carbonate type (MCFC), a solid oxide type (SOFC), a solid polymer type (PEFC), etc., according to kinds of electrolytes used therein.

As to the fuel sources for generating hydrogen used in the fuel cells, there have been made intensive studies on various extensive hydrocarbon-containing raw materials including petroleum-based fuels such as kerosene, isooctane and gasoline, LPG and a city gas.

As the method of obtaining a reformed gas comprising hydrogen as a main component by reforming the hydrocarbon-containing fuels, there are known various reforming techniques such as SR (steam reforming) method, POX (partial oxidation) method and SR + POX (autothermal) method. Among these reforming techniques, application of the steam-reforming (SR) method to cogeneration has been most noticed, because the SR method enables production of a reformed gas having a high hydrogen concentration.

The steam reforming (SR) is conducted according to the following reaction formula:

$$C_nH_{2n+2} + nH_2O \rightarrow nCO + (2n+1)H_2$$

$$CO + H_2O \rightarrow CO_2 + H_2$$

In general, the above reaction is conducted at a temperature of 600 to 800°C and a S/C ratio (steam/carbon ratio) of about 2.0 to about 3.5. In addition, the reaction is an endothermic reaction and, therefore, can be accelerated as the reaction temperature is increased.

In general, in the fuel cell system, there may be used the process in which after a substantially whole amount of sulfur components contained in a fuel is removed therefrom using a desulfurizer, the thus desulfurized hydrocarbon is decomposed to obtain a reformed gas comprising hydrogen as a main component, and the resulting reformed gas is introduced into a fuel cell stack. In such a conventional process, a reforming catalyst is used to reform the hydrocarbons. However, the reforming catalyst tends to undergo deterioration in catalyst performance during the operation for a long period of time. In particular, the reforming catalyst tends to be poisoned with a trace amount of sulfur components slipped through the desulfurizer, resulting in problems such as significant deterioration in catalytic activity thereof. In addition, when C2 or more hydrocarbons are used as a fuel, the hydrocarbons in the fuel tend to suffer from thermal decomposition, resulting in deposition of carbon on the catalyst, production of polycondensates and deterioration in performance of the reforming catalyst. Also, among these fuel cell systems, the reforming catalysts for PAFC and PEFC are generally used in the form of a molded product such as beads. In this case, if the beads-shaped catalysts suffer from significant coking inside thereof, the catalysts tend to be broken and powdered in worse cases, resulting in clogging of a reaction tube therewith.

The fuels such as a city gas, LPG, kerosene, gasoline and naphtha comprise not only $C_1$ but also $C_2$ or more hydrocarbons. For example, the city gas 13A comprises about 88.5% of methane, about 4.6% of ethane, about 5.4% of propane and about 1.5% of butane, i.e., comprises, in addition to methane as a main component thereof, hydrocarbons having 2 to 4 carbon atoms in an amount as large as 11.5%. Also, LPG comprises about 0.7% of ethane, about 97.3% of propane, about 0.2% of propylene and about 1.8% of butane, i.e., comprises the $C_4$ hydrocarbon in an amount of 1.8%. These C2 or more hydrocarbons tend to be readily thermally decomposed to cause deposition of carbon.

At present, as an active metal species of the steam reforming catalysts, there may be used noble metals such as Pt, Rh, Ru, Ir and Pd, and base metals such as Ni, Co and Fe. Among these metals, in the consideration of high catalytic activity, there have been mainly used catalysts supporting a metal element such as Ni and Ru.

The noble metal elements such as Ru tend to hardly undergo deposition of carbon even under a low S/C (steam/carbon) ratio condition. However, the noble metals tend to be readily poisoned with sulfur components contained in the raw materials, and deteriorated in catalytic activity for a short period of time. Further, deposition of carbon tends to be extremely readily caused on the sulfur-poisoned catalysts. Thus, even in the case where the noble metals are used, there also tends to arise such a problem that deposition of carbon is induced by the poisoning with sulfur. In addition, since the noble metals are expensive, the fuel cell systems using the noble metals tend to become very expensive, thereby preventing further spread of such fuel cell systems.

On the other hand, since Ni as a base metal element tends to relatively readily undergo deposition of carbon, it is required that the Ni-containing catalyst is used under a high steam/carbon ratio condition in which steam is added in an excessive amount as compared to a theoretical compositional ratio thereof, so that the operation procedure tends to become complicated, and the unit requirement of steam tends to be increased, resulting in uneconomical process. Further, since the conditions for continuous operation of the system are narrowed, in order to complete the continuous operation of the system using the Ni-containing catalyst, not only an expensive control system but also a very complicated system as a whole are required. As a result, the production costs and maintenance costs tend to be increased, resulting in uneconomical process.

Since the fuel cell system is subjected to DSS (Daily Start-up and Shutdown) operation, the catalyst particles filled in a reactor are gradually closely compacted by repeated expansion/contraction and swelling of the reactor owing to external heating, which tends to finally cause breakage of the catalyst. For this reason, there is a strong demand for a porous catalyst body which is capable of withstanding expansion/contraction and swelling of the reactor.

In addition, it has also been demanded to provide a hydrocarbon-decomposing catalyst which is less expensive and can exhibit as its functions an excellent catalytic activity capable of decomposing and removing hydrocarbons, a good anti-coking property even under a low steam condition, and an excellent durability.

Conventionally, there have been reported hydrocarbon-decomposing catalysts formed by supporting a catalytically active metal such as platinum, palladium, ruthenium, cobalt, rhodium, ruthenium and nickel on a carrier such as $\alpha$-alumina, magnesium oxide and titanium oxide (Patent Documents 1 to 3, etc.). Also, there is known the method for producing a hydrocarbon-decomposing catalyst by using an Ni-containing hydrotalcite compound as a precursor (Patent Documents 4 and 5, etc.)

Patent Document 6 relates to a process of a conversion of hydrocarbons to hydrogen and one or more oxides of carbon, comprising contacting the hydrocarbon with steam and/or oxygen in the presence of a spinel-phase crystalline catalyst comprising a catalytically active metal.

Patent Document 7 relates to a catalyst for decomposing a hydrocarbon composed of a hydrocarbon having two or more carbon atoms, which contains magnesium, aluminium, nickel and cobalt as the constitutional elements, while further containing ruthenium and/or palladium.

Patent Document 8 relates to a tar-reforming catalyst which can reform a thermally degradable tar (a carbonaceous raw material) to produce a gas. The catalyst is produced by: producing a precipitate in a solution containing nickel and magnesium with a precipitating agent; drying and firing the precipitate to produce an oxide containing nickel and magnesium; mixing the oxide with alumina and water or an alumina sol; and at least drying and firing the mixture.

Patent Document 9 describes a chromium-free catalyst for the low-temperature conversion of carbon monoxide and water into hydrogen and carbon dioxide, which comprises a mixed oxide of at least copper oxide, zinc oxide and aluminium oxide, with the catalyst precursor being present essentially as hydrotalcite and the content of copper oxide being not more than 20% by weight.

PRIOR ART DOCUMENTS

PATENT DOCUMENTS

Patent Document 1: Japanese Patent Application Laid-Open (KOKAI) No. 9-173842
Patent Document 2: Japanese Patent Application Laid-Open (TOKUHYO) No. 2000-503624
Patent Document 3: Japanese Patent Application Laid-Open (KOKAI) No. 2003-135967
Patent Document 4: Japanese Patent Application Laid-Open (KOKAI) No. 2001-146406
Patent Document 5: Japanese Patent Application Laid-Open (KOKAI) No. 2004-82034
Patent Document 6: WO 2008/049266 A1
Patent Document 7: WO 2009/011133 A1
Patent Document 8: WO 2009/084736 A1
Patent Document 9: WO 2008/012255 A2

## SUMMARY OF THE INVENTION

## PROBLEM TO BE SOLVED BY THE INVENTION

In the technique of the Patent Document 1, there is described the process for producing hydrogen by subjecting fuels comprising hydrocarbons such as kerosene to steam reforming using a catalyst comprising Ru as an active metal species which is supported on $\alpha$-alumina as a carrier. However, it is considered that the Ru-based catalyst tends to suffer from sulfidization with sulfur components contained in the raw materials which results in promoted coking and deactivation of the catalyst.

In the techniques of the Patent Documents 2 and 3, the obtained catalyst is improved in anti-sulfur poisoning property to some extent, but will be still insufficient.

In the techniques of the Patent Documents 4 and 5, there are described hydrocarbon-decomposing catalysts obtained by using an Ni-containing hydrotalcite compound as a precursor. However, these techniques fail to take into account a crushing strength and a displacement length of the porous catalyst bodies.

An object of the present invention is to provide a catalyst as a porous catalyst body for decomposing hydrocarbons which is less expensive, and has an excellent catalytic activity for decomposition and removal of hydrocarbons, an excellent anti-sulfur poisoning property, a high anti-coking property even under a low-steam condition, a crushing strength and a displacement length which are optimum for DSS operation, and an excellent durability.

Also, the present invention relates to a porous catalyst body for decomposing hydrocarbons and a process for producing the porous catalyst body. Therefore, another object of the present invention is to provide a porous catalyst body for decomposing hydrocarbons which has a high crushing strength and a large displacement length, as well as a process for producing the porous catalyst body.

A further object of the present invention is to provide a process for effectively decomposing and removing hydrocarbons and producing hydrogen, by using the above catalyst.

## MEANS FOR SOLVING THE PROBLEM

The above-described technical problems or tasks can be achieved by the following aspects of the present invention.

That is, according to the present invention, there is provided a porous catalyst body for decomposing hydrocarbons, comprising a porous composite oxide comprising at least magnesium and/or calcium, and aluminum, and metallic nickel having a particle diameter of 1 to 25 nm, which porous catalyst body has an average crushing strength of not less than 49 N (= 5 kgf) and a displacement length of not less than 0.05 mm as measured by compressing the porous catalyst body under a load of 49 N (= 5 kgf), wherein a content of aluminum in the porous catalyst body is 15 to 45% by weight, a nickel content in the porous catalyst body is 5 to 30% by weight in terms of metallic nickel, and a content of the metallic nickel is 40 to 75% by weight based on a total nickel content in the porous catalyst body.

Preferably, the porous catalyst body for decomposing hydrocarbons further comprises at least one element selected from the group consisting of an alkali metal element, an alkali earth metal element, a rare earth element and a noble metal element.

Preferably, the porous catalyst body for decomposing hydrocarbons has a spherical shape and a diameter of 1 to 10mm.

Preferably, the porous catalyst body for decomposing hydrocarbons is formed into a honeycomb structure.

In addition, according to the present invention, there is provided a process for producing the porous catalyst body for decomposing hydrocarbons of the invention, comprising the steps of:

mixing hydrotalcite compound particles comprising at least magnesium and/or calcium, nickel and aluminum with aluminum hydroxide;
molding the resulting mixture; and
subjecting the molded product to calcination and reduction treatment.

Preferably, in the process the hydrotalcite compound particles have:

(a) an average plate surface diameter of 0.05 to 0.4 $\mu$m; and/or
(b) a crystallite size D006 of 0.001 to 0.08 $\mu$m; and/or
(c) a diameter of secondary agglomerated particles of 0.1 to 200 $\mu$m.

It is also preferred in the process that the hydrotalcite compound particles have a BET specific surface area of 3.0 to 300 $m^2$/g.

It is further preferred in the process that the calcination treatment is carried out at a temperature of 700 to 1500°C.

It is additionally preferred in the process that the calcination time is from 1 to 72 hours.

It is further preferred in the process that the reduction treatment is carried out at a temperature of 600 to 900°C.

Further, according to the present invention, there is provided a process for producing a mixed reformed gas comprising hydrogen from hydrocarbons, comprising the step of reacting the hydrocarbons with steam at a temperature of 250 to 850°C, at a molar ratio of steam to carbon (S/C) of 1.0 to 6.0 and at a space velocity (GHSV) of 100 to 100000 h$^{-1}$ by using the porous catalyst body for decomposing hydrocarbons of the invention.

Furthermore, there is provided a fuel cell system comprising the porous catalyst body for decomposing hydrocarbons of the invention.

Preferably, the fuel cell system has a daily start-up and shutdown operation.

EFFECT OF THE INVENTION

The porous catalyst body for decomposing hydrocarbons according to the present invention comprises metallic nickel in the form of very fine particles. For this reason, the metallic nickel as an active metal species has an increased contact area with steam, so that the porous catalyst body can exhibit an excellent catalytic activity.

Further, the porous catalyst body for decomposing hydrocarbons according to the present invention has a high crushing strength. For this reason, even when the porous catalyst body suffers from coking during the catalytic reaction, the porous catalyst body can maintain an excellent catalytic activity without occurrence of breakage and powdering.

In addition, the porous catalyst body for decomposing hydrocarbons according to the present invention also has a large displacement length. For this reason, even when the catalyst layer is densely compacted owing to repeated expansion/contraction and swelling of the reactor during DSS operation, the porous catalyst body can act for relaxing a pressure applied thereto by itself and therefore can maintain an excellent catalytic activity without occurrence of breakage and powdering.

As described above, the porous catalyst body for decomposing hydrocarbons according to the present invention also has a high catalytic activity. Therefore, even under a low-steam condition, the porous catalyst body can exhibit an excellent anti-coking property and a high catalytic activity.

In addition, the porous catalyst body for decomposing hydrocarbons according to the present invention comprises metallic nickel in the form of very fine particles and therefore has a very large number of active sites, and as a result, exhibits a high anti-sulfur poisoning property as well as an excellent catalytic activity in view of its durability.

PREFERRED EMBODIMENTS FOR CARRYING OUT THE INVENTION

First, the porous catalyst body for decomposing hydrocarbons according to the present invention is described.

The porous catalyst body for decomposing hydrocarbons according to the present invention comprises a porous composite oxide comprising at least magnesium and/or calcium, and aluminum, and metallic nickel. The porous catalyst body for decomposing hydrocarbons according to the present invention may also comprise a porous composite oxide comprising nickel and aluminum. These composite oxides are preferably in the form of a compound having a spinel type crystal structure. Meanwhile, the above porous composite oxide comprising nickel and aluminum is produced as a residue when not a whole amount (100%) of a nickel oxide portion of a porous composite oxide comprising at least magnesium and/or calcium, and aluminum as well as nickel, is subjected to reduction reaction (deposition of metallic nickel).

The porous catalyst body for decomposing hydrocarbons according to the present invention comprises metallic nickel having a particle diameter of 1 to 25 nm. The above metallic nickel is produced by subjecting the nickel oxide portion of the porous composite oxide comprising at least magnesium and/or calcium, and aluminum as well as nickel to reduction reaction. It may be difficult to obtain metallic nickel having a particle diameter of less than 1 nm. When the particle diameter of the metallic nickel is more than 25 nm, the resulting catalyst tends to be deteriorated in initial catalytic activity and simultaneously tends to exhibit a poor anti-coking property. The particle diameter of the metallic nickel is preferably 1 to 24 nm and more preferably 2 to 20 nm.

Also, the porous catalyst body for decomposing hydrocarbons according to the present invention has an average crushing strength of not less than 49 N (= 5 kgf). When the average crushing strength of the porous catalyst body is less than 49 N (= 5 kgf), the resulting catalyst tends to suffer from occurrence of cracks when used in high-temperature conditions, and if any coking occurs inside of the catalyst, the obtained porous catalyst body tends to suffer from breakage and powdering. The average crushing strength of the porous catalyst body is preferably 59 to 490 N (= 6 to 50 kgf) and more preferably 69 to 390 N (= 7 to 40 kgf).

The porous catalyst body for decomposing hydrocarbons according to the present invention has a displacement length of not less than 0.05 mm as measured by compressing the porous catalyst body under a load of 49 N (= 5 kgf). When the displacement length of the porous catalyst body is less than 0.05 mm, the resulting porous catalyst body tends to be incapable of withstanding expansion/contraction and swelling of the reactor during DSS operation, resulting in breaking of the porous catalyst body. The displacement length of the porous catalyst body is preferably not less than 0.11 mm, and the upper limit of the displacement length of the porous catalyst body is about 0.4 mm.

In addition, the porous catalyst body for decomposing hydrocarbons according to the present invention has a nickel content of 5 to 30% by weight in terms of metallic nickel (i.e., in terms of nickel element). When the nickel content of the porous catalyst body is less than 5% by weight, the resulting porous catalyst body tends to be considerably deteriorated in initial catalytic activity. On the other hand, when the nickel content of the porous catalyst body is more than 30% by weight, it may be difficult to obtain a catalyst comprising metallic nickel whose particle diameter lies within the above-specified range. The nickel content of the porous catalyst body is more preferably 7 to 27% by weight and still more preferably 9 to 24% by weight.

The above metallic nickel having a particle diameter of 1 to 25 nm is produced by subjecting the nickel oxide portion of the porous composite oxide comprising at least magnesium and/or calcium, aluminum and nickel to reduction reaction. The content of nickel as metallic nickel (i.e., reduction ratio of the nickel oxide) is 40 to 75% by weight based on a total nickel content in the porous catalyst body. When the metallic nickel content in the porous catalyst body is less than 40% by weight, the resulting porous catalyst body tends to be considerably deteriorated in initial catalytic activity. On the other hand, it will be possible to reduce more than 75% by weight of the nickel oxide. However, in such a case, it may be difficult to obtain a catalyst comprising metallic nickel whose particle diameter lies within the above-specified range. The metallic nickel content in the porous catalyst body is more preferably 42 to 75% by weight and still more preferably 45 to 73% by weight based on the total nickel content.

Also, the aluminum content in the porous catalyst body is 15 to 45% by weight in terms of metallic aluminum. When the aluminum content in the porous catalyst body is less than 15% by weight, it may be difficult to produce a porous catalyst body having a satisfactory displacement length. On the other hand, when the aluminum content in the porous catalyst body is more than 45% by weight, the metallic nickel content based on the total nickel content in the porous catalyst body tends to become less than 40% by weight, so that the resulting porous catalyst body tends to be considerably deteriorated in initial catalytic activity. The aluminum content in the porous catalyst body is more preferably 27 to 45% by weight and still more preferably 28 to 43% by weight.

The porous catalyst body for decomposing hydrocarbons according to the present invention may comprise at least one element selected from the group consisting of an alkali metal element, an alkali earth metal element, a rare earth element and a noble metal element. Examples of the alkali metal element include sodium and potassium. Examples of the alkali earth metal element include magnesium, calcium, strontium and barium. Examples of the rare earth element include 3B Group elements and lanthanoid series elements such as scandium, yttrium, lanthanum, cerium, praseodymium, neodymium, samarium, europium and gadolinium. Examples of the noble metal element include platinum, gold, iridium, palladium, silver, indium, rhenium, ruthenium and rhodium.

The combination and amounts of these elements used are not particularly limited, and may be appropriately selected, in particular, in view of a performance of the catalyst according to its applications. For example, the contents of these elements in the porous catalyst body are respectively 20 ppm to 65% by weight.

Next, the process for producing the porous catalyst body for decomposing hydrocarbons according to the present invention is described.

In the process for producing the porous catalyst body for decomposing hydrocarbons according to the present invention, the porous catalyst body is produced by adding aluminum hydroxide to hydrotalcite compound particles comprising at least magnesium and/or calcium, nickel and aluminum as a precursor, followed by mixing them with each other; molding the resulting mixture; subjecting the molded product to calcination to produce a porous oxide molded product; and thereafter subjecting the porous oxide molded product to reduction treatment.

Further, in the process of the present invention, the porous catalyst body may also be produced by impregnating the oxide particles produced by calcining a hydrotalcite compound with a nickel-containing solution to regenerate and support a hydrotalcite phase comprising nickel on the oxide particles; adding aluminum hydroxide to the resulting impregnated product, followed by mixing them with each other; calcining the resulting mixture to obtain a porous oxide molded product; and then subjecting the resulting porous oxide molded product to heating reduction treatment.

Furthermore, in the process of the present invention, the porous catalyst body may be produced by further impregnating a porous oxide molded product obtained by calcining the hydrotalcite compound molded product comprising aluminum hydroxide with a nickel-containing solution to regenerate and support a hydrotalcite phase comprising nickel in the vicinity of a surface of the porous oxide molded product; and then subjecting the thus obtained product to heating reduction treatment.

The hydrotalcite compound particles used in the present invention comprise at least magnesium and/or calcium, nickel and aluminum. The hydrotalcite compound particles used in the present invention may be obtained by mixing an anion-containing alkaline aqueous solution with an aqueous solution comprising a magnesium raw material and/or a calcium raw material, a nickel raw material and an aluminum raw material to prepare a mixed solution having a pH value of 7.0 to 13.0, aging the resulting mixed solution in a temperature range of 50 to 300°C, and then subjecting the resulting mixture to separation by filtration and drying.

The aging time is not particularly limited and is 1 to 80 hr, preferably 3 to 24 hr and more preferably 5 to 18 hr. When the aging time is more than 80 hr, such a growth reaction tends to be industrially disadvantageous.

The magnesium raw material and/or the calcium raw material, the nickel raw material and the aluminum raw material are not particularly limited as long as they are in the form of a water-soluble material such as a nitric acid salt.

Examples of the magnesium raw material used in the process of the present invention include magnesium oxide, magnesium hydroxide, magnesium oxalate, magnesium sulfate, magnesium sulfite, magnesium nitrate, magnesium chloride, magnesium citrate, basic magnesium carbonate and magnesium benzoate.

Examples of the calcium raw material used in the process of the present invention include calcium oxide, calcium hydroxide, calcium oxalate, calcium sulfate, calcium sulfite, calcium nitrate, calcium chloride, calcium citrate and basic calcium carbonate.

Examples of the nickel raw material used in the process of the present invention include nickel oxide, nickel hydroxide, nickel sulfate, nickel carbonate, nickel nitrate, nickel chloride, nickel benzoate, basic nickel carbonate, nickel formate, nickel citrate and diammonium nickel sulfate.

Examples of the aluminum raw material used in the process of the present invention include aluminum oxide, aluminum hydroxide, aluminum acetate, aluminum chloride, aluminum nitrate, aluminum oxalate and basic aluminum ammonium.

In addition, when producing the hydrotalcite compound particles as used in the present invention, at least one element selected from the group consisting of an alkali metal element, an alkali earth metal element, a rare earth element and a noble metal element may be added thereto. Examples of the alkali metal element include sodium and potassium. Examples of the alkali earth metal element include magnesium, calcium, strontium and barium. Examples of the rare earth element include 3B Group elements and lanthanoid series elements such as scandium, yttrium, lanthanum, cerium, praseodymium, neodymium, samarium, europium and gadolinium. Examples of the noble metal element include platinum, gold, iridium, palladium, silver, indium, rhenium, ruthenium and rhodium.

Further, in the process of the present invention, the porous catalyst body may be produced by impregnating the oxide particles produced by calcining a hydrotalcite compound with a solution comprising the above additive element to regenerate and support a hydrotalcite phase comprising the above additive element on the oxide particles; adding aluminum hydroxide to the resulting impregnated product, followed by mixing them with each other; molding the resulting mixture and calcining the resulting molded product to obtain a porous oxide molded product; and then subjecting the resulting porous oxide molded product to heating reduction treatment.

Furthermore, in the process of the present invention, the porous catalyst body may be produced by further impregnating a porous oxide molded product obtained by calcining the hydrotalcite compound molded product comprising aluminum hydroxide with a solution comprising the above additive element to regenerate and support a hydrotalcite phase comprising the above additive element in the vicinity of a surface of the porous oxide molded product; and then subjecting the thus obtained product to heating reduction treatment.

The hydrotalcite compound particles used in the present invention preferably have an average plate surface diameter of 0.05 to 0.4 $\mu$m. When the average plate surface diameter of the hydrotalcite compound particles is less than 0.05 $\mu$m, it may be difficult to subject the resulting particles to separation by filtration and washing with water, so that it may be difficult to industrially produce the hydrotalcite compound particles. On the other hand, when the average plate surface diameter of the hydrotalcite compound particles is more than 0.4 $\mu$m, it may be difficult to produce the porous catalyst body for decomposing hydrocarbons from the large hydrotalcite compound particles.

The hydrotalcite compound particles used in the present invention preferably have a crystallite size D006 of 0.001 to 0.08 $\mu$m. When the crystallite size D006 of the hydrotalcite compound particles is less than 0.001 $\mu$m, the viscosity of the resulting water suspension tends to be too high, so that it may be difficult to industrially produce the hydrotalcite compound particles. When the crystallite size D006 of the hydrotalcite compound particles is more than 0.08 $\mu$m, it may be difficult to produce the aimed porous catalyst body for decomposing hydrocarbons therefrom. The crystallite size D006 of the hydrotalcite compound particles is more preferably 0.002 to 0.07 $\mu$m.

The hydrotalcite compound particles used in the present invention preferably have a BET specific surface area of 3.0 to 300 m$^2$/g. When the BET specific surface area of the hydrotalcite compound particles is less than 3.0 m$^2$/g, it may be difficult to produce the aimed porous catalyst body for decomposing hydrocarbons therefrom. When the BET specific surface area of the hydrotalcite compound particles is more than 300 m$^2$/g, the viscosity of the resulting water suspension tends to be too high, and it may also be difficult to subject the suspension to separation by filtration and washing with water. As a result, it may be difficult to industrially produce the hydrotalcite compound particles. The BET specific surface area of the hydrotalcite compound particles is more preferably 5.0 to 250 m$^2$/g.

The diameter of secondary agglomerated particles of the hydrotalcite compound particles used in the present invention is 0.1 to 200 $\mu$m. When the diameter of secondary agglomerated particles of the hydrotalcite compound particles is less than 0.1 $\mu$m, the resulting particles tend to be hardly subjected to pulverization treatment. As a result, it may be difficult to industrially produce the aimed particles. When the diameter of secondary agglomerated particles of the hydrotalcite compound particles is more than 200 $\mu$m, it may be difficult to produce a molded product therefrom. The diameter of secondary agglomerated particles of the hydrotalcite compound particles is preferably 0.2 to 100 $\mu$m.

The pulverization treatment may be carried out using a general pulverizing device (such as an atomizer, YARIYA and a Henschel mixer).

In the present invention, the hydrotalcite compound particles as a precursor of the porous catalyst body for decomposing hydrocarbons are mixed with aluminum hydroxide, a molding assistant and further with water and an alcohol as a dispersing medium, and the resulting mixture is kneaded into a clayey mass using a kneader (such as a screw kneader), followed by molding the resulting clayey mass into a desired shape. As the molding method, there may be used a compression molding method, a press molding method, a tablet molding method, etc.

The shape of the molded product of the porous catalyst body for decomposing hydrocarbons according to the present invention is not particularly limited and may be any shape suitably used for ordinary catalysts. Examples of the shape of the molded product include a spherical shape, a cylindrical shape, a hollow cylindrical shape and a pellet shape.

The porous catalyst body for decomposing hydrocarbons which has a spherical shape usually has a size of 1 to 10 mm$\phi$ and preferably 2 to 8 mm$\phi$.

Examples of the molding assistant usable in the above process include celluloses, polyvinyl alcohol, starches, methyl cellulose, maltose and carboxymethyl cellulose. These molding assistants may be be used in combination of any two or more thereof. These molding assistants are completely burned out by the calcination treatment and therefore dissipated from the porous catalyst body for decomposing hydrocarbons without any residues therein. The amount of the molding assistant added may be, for example, 1 to 50 parts by weight based on 100 parts by weight of the hydrotalcite compound particles.

As the aluminum hydroxide added, there may be mentioned those comprising boehmite, gibbsite, bayerite, etc., as a crystal phase thereof. The aluminum hydroxide may have a particle shape such as an acicular shape, a plate shape and a polyhedral shape. The primary particles of the aluminum hydroxide preferably have a particle diameter of 0.01 to 5 $\mu$m and a BET specific surface area of 0.1 to 150 m$^2$/g. When the particle diameter of the aluminum hydroxide is less than 0.01 $\mu$m, the resulting porous catalyst body tends to hardly exhibit a desired displacement length. On the other hand, when the particle diameter of the aluminum hydroxide is more than 5 $\mu$m, the resulting porous catalyst body tends to is considerably deteriorated in crushing strength. The particle diameter of the aluminum hydroxide is more preferably 0.05 to 2 $\mu$m. The aluminum hydroxide may be added, for example, in an amount of 1 to 100 parts by weight based on 100 parts by weight of the hydrotalcite compound particles.

Examples of the alcohols include monohydric alcohols such as ethanol and propanol; glycols such as ethylene glycol, propylene glycol, butanediol and polyethylene glycol; and polyhydric alcohols such as glycerol. These alcohols may be used in combination of any two or more thereof. The amount of the alcohols added may be, for example, 50 to 150 parts by weight based on 100 parts by weight of the hydrotalcite compound particles.

In addition, a combustible substance may also be added to the hydrotalcite compound particles. Examples of the combustible substance include wood chips, cork grains, coal powder, activated carbon, crystalline cellulose powder, starches, sucrose, gluconic acid, polyethylene glycol, polyvinyl alcohol, polyacrylamide, polyethylene, polystyrene and a mixture thereof. As the amount of the above combustible substance added is increased, the pore volume of the resulting molded product becomes larger. However, the addition of an excessive amount of the combustible substance tends to result in deteriorated strength of the resulting molded product. Therefore, the amount of the combustible substance added may be suitably controlled in view of a good strength of the resulting molded product.

Alternatively, the porous catalyst body for decomposing hydrocarbons may be formed into a honeycomb structure. In such a case, the honeycomb-shaped molded product may be obtained by an optional method selected according to the requirements.

The hydrotalcite compound molded product obtained by the above method may be dried by various methods such as air drying, hot air drying and vacuum drying.

The thus dried hydrotalcite compound molded product is further calcined to obtain the porous oxide molded product. The calcination treatment may be carried out at a temperature of 700 to 1500°C. When the calcination temperature is lower than 700°C, the calcination treatment tends to require a prolonged time to ensure a good crushing strength of the resulting porous catalyst body, resulting in industrial disadvantageous process. On the other hand, when the calcination temperature is higher than 1500°C, the resulting porous catalyst body tends to hardly comprise a desired amount of metallic nickel. The calcination temperature is preferably 800 to 1400°C and more preferably 900 to 1300°C.

The calcination time is 1 to 72 hr. When the calcination time is shorter than 1 hr, the resulting porous catalyst body tends to be deteriorated in crushing strength. When the calcination time is longer than 72 hr, such a prolonged calcination treatment tends to be disadvantageous from industrial viewpoints. The calcination time is preferably 2 to 60 hr and more preferably 3 to 50 hr.

The porous catalyst body for decomposing hydrocarbons according to the present invention is obtained by subjecting the porous oxide molded product to reduction treatment at a temperature of 600 to 900°C. When the temperature used in the reduction treatment is less than 600°C, the nickel tends to be hardly metalized, so that the resulting porous catalyst body may fail to exhibit a high catalytic activity as aimed by the present invention. When the temperature used in the reduction treatment is more than 900°C, sintering of the nickel tends to excessively proceed so that the particle size of the resulting particles tends to be too large. As a result, the resulting porous catalyst body tends to be deteriorated in conversion rate of hydrocarbons under a low-temperature condition, and further deteriorated in anti-coking property. The temperature used in the reduction treatment is preferably 700 to 850°C

The atmosphere used in the reduction treatment is not particularly limited as long as it is a reducing atmosphere such as a hydrogen-containing gas. The time of the reduction treatment is not particularly limited and is preferably 0.5 to 24 hr. When the time of the reduction treatment is more than 24 hr, the process tends to have no merit from industrial viewpoints. The time of the reduction treatment is preferably 1 to 10 hr.

Next, the process for producing a mixed reformed gas comprising hydrogen from hydrocarbons according to the present invention is described.

The porous catalyst body for decomposing hydrocarbons according to the present invention is contacted with hydrocarbons to obtain a mixed reformed gas comprising hydrogen.

In the process for producing a mixed reformed gas comprising hydrogen from hydrocarbons according to the present invention, a raw material gas comprising hydrocarbons and steam are contacted with the porous catalyst body for decomposing hydrocarbons according to the present invention under the conditions including a temperature of 250 to 850°C, a molar ratio of steam to carbon (S/C ratio) of 1.0 to 6.0 and a space velocity (GHSV) of 100 to 100000 $h^{-1}$.

When the reaction temperature is less than 250°C, the conversion rate of lower hydrocarbons tends to be reduced, so that when the reaction is conducted for a long period of time, coking tends to be caused, finally resulting in deterioration in catalytic activity, i.e., deactivation of the catalyst. When the reaction temperature is more than 850°C, the active metal species tends to suffer from sintering, so that the catalyst tends to be deactivated. The reaction temperature is preferably 300 to 700°C and more preferably 400 to 700°C.

When the molar ratio S/C of steam (S) to carbon (C) is less than 1.0, the porous catalyst body tends to be deteriorated in anti-coking property. When the molar ratio S/C is more than 6.0, a large amount of steam tends to be required for the production of hydrogen, resulting in high production costs and therefore unpractical process. The molar ratio S/C is preferably 1.5 to 6.0 and more preferably 1.8 to 5.0.

Meanwhile, the space velocity (GHSV) is preferably 100 to 100000 $h^{-1}$ and more preferably 1000 to 10000 $h^{-1}$.

The hydrocarbons used in the present invention are not particularly limited, and various hydrocarbons may be used therein. Examples of the hydrocarbons may include saturated aliphatic hydrocarbons such as methane, ethane, propane, butane, pentane, hexane and cyclohexane; unsaturated hydrocarbons such as ethylene, propylene and butene; aromatic hydrocarbons such as benzene, toluene and xylene; and mixtures of these compounds. Also, suitable examples of the industrially usable raw materials may include city gas 13A, natural gases, LPG, kerosene, gasoline, light oils and naphtha.

When the hydrocarbons used in the present invention are those kept in a liquid state at room temperature such as kerosene, gasoline and light oils, such hydrocarbons may be vaporized by an evaporator upon use.

The porous catalyst body for decomposing hydrocarbons according to the present invention can exhibit sufficient catalytic activity, durability, anti-coking property and anti-sulfur poisoning property even in the case where the decomposition process is started by an autothermal reforming reaction and then changed to steam reforming reaction, and further in the case where the steam reforming is continued for a long period of time. Therefore, the porous catalyst body of the present invention can provide an optimum catalyst for fuel cell systems with DSS (Daily Start-up and Shutdown).

<Function>

The reason why the porous catalyst body for decomposing hydrocarbons according to the present invention can exhibit a high crushing strength and a large displacement length, and is excellent in catalytic activity, anti-sulfur poisoning property and anti-coking property, is considered by the present inventor as follows.

That is, the porous catalyst body for decomposing hydrocarbons according to the present invention is produced by adding aluminum hydroxide to hydrotalcite compound particles in the form of a layered double hydroxide which comprise at least magnesium and/or calcium, nickel and aluminum, and subjecting the resulting mixture to calcination treatment at a high temperature. Therefore, the hydrotalcite particles are crosslinked through the aluminum hydroxide being present therebetween, so that the resulting molded product can exhibit a large displacement length when compressed. As a result, the present inventors have considered that the obtained molded product hardly suffers from occurrence of cracks.

It has been considered by the present inventors that the porous catalyst body for decomposing hydrocarbons according to the present invention can exhibit a high crushing strength owing to a spinel phase comprising nickel and aluminum which is produced by the high-temperature calcination.

The porous catalyst body for decomposing hydrocarbons according to the present invention has an excellent catalytic activity because metallic nickel is present therein in the form of very fine particles, so that the contact area of the metallic nickel as an active metal species with steam is increased.

In addition, as described above, the porous catalyst body for decomposing hydrocarbons according to the present invention has a high catalytic activity and, therefore, can exhibit an excellent anti-coking property and a high catalytic activity even under a low-steam condition.

Furthermore, the porous catalyst body for decomposing hydrocarbons according to the present invention has a very large number of active sites because metallic nickel is present therein in the form of very fine particles, and therefore is enhanced in anti-sulfur poisoning property. For this reason, the porous catalyst body is excellent in catalytic activity in view of its durability.

EXAMPLES

The present invention is described in more detail by Examples. However, these Examples are only illustrative and therefore not intended to limit the invention thereto. The evaluation methods used in Examples, etc., are as follows.

The BET specific surface area was measured by nitrogen BET method.

The crushing strength and displacement length of the porous catalyst body were respectively determined from an average value of strengths or lengths of the 100 catalyst bodies which were measured using a digital force gauge according to JIS Z 8841. Meanwhile, the displacement length was regarded as a displacement of the porous catalyst body when compressed under a load of 49 N (= 5 kgf).

The particle size of metallic nickel particles was expressed by an average value of the particle sizes measured by an electron microscope. The particle size of the metal fine particles which was more than 10 nm was calculated according to the Scherrer's formula from particle sizes thereof measured using an X-ray diffractometer "RINT 2500" manufactured by Rigaku Denki Co., Ltd., (tube: Cu; tube voltage: 40 kV; tube current: 300 mA; goniometer: wide-angle goniometer; sampling width: 0.020°; scanning speed: 2°/min; light-emitting slit: 1°; scattering slit: 1°; light-receiving slit: 0.50 mm). The particle size of metallic nickel particles which was determined using the X-ray diffractometer was the same as that measured using the electron microscope.

The content of each of nickel, aluminum, an alkali metal element, an alkali earth metal element, a rare earth element and a noble metal element was determined as follows. That is, a sample was dissolved in an acid, and the resulting solution was analyzed by a plasma emission spectroscopic device ("SPS-4000" manufactured by Seiko Denshi Kogyo Co., Ltd.).

The metallic nickel content was determined as follows. That is, the porous catalyst body was heated under an oxygen gas flow at 800°C using a thermogravimetric measuring apparatus to measure an amount of nickel oxidized from which the above metallic nickel content was determined.

Typical examples of the present invention are described below.

Example 1: <Production of Hydrotalcite Compound Particles>

$MgSO_4 \cdot 7H_2O$, $Al_2(SO_4)_3 \cdot 8H_2O$ and $NiSO_4 \cdot 6H_2O$ were weighed in amounts of 1113.2 g, 439.3 g and 308.8 g, respectively, and dissolved in pure water to prepare 20000 mL of a mixed solution thereof. Separately, 3772 mL of an NaOH solution (concentration: 14 mol/L) were mixed with a solution in which 134.1 g of $Na_2CO_3$ were dissolved, to prepare 5000 mL of an alkali mixed solution. Then, the thus prepared alkali mixed solution was mixed with the mixed solution comprising the above magnesium salt, aluminum salt and nickel salt, and the resulting solution was aged at 95°C for 8 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 33.0 $m^2$/g, and the secondary agglomerated particles thereof obtained after subjecting the hydrotalcite compound to the pulverization treatment had an average particle diameter of 48.2 $\mu$m.

<Production of Porous Catalyst Body for Decomposing Hydrocarbons>

Next, 567.2 g of the thus obtained hydrotalcite compound particles were mixed with 62.39 g of aluminum hydroxide (crystal phase: boehmite; BET specific surface area: 110.6 $m^2$/g), 64.9 g of PVA, 119.1 g of water and 368.7 g of ethylene glycol, and the resulting mixture was kneaded using a screw kneader for 3 hr. The thus obtained clayey kneaded material was formed into a spherical shape by a compression molding method, and the resulting spherical molded product was dried at 105°C and calcined at 1120°C for 4 hr, thereby obtaining a porous oxide molded product. Thereafter, the thus obtained porous oxide molded product was subjected to reduction treatment at 780°C in a gas flow comprising 100% of hydrogen for 4 hr, thereby obtaining a porous catalyst body for decomposing hydrocarbons. As a result, it was confirmed that the resulting 3.2 mmφ porous catalyst body for decomposing hydrocarbons had a nickel content of 17.308% by weight among which a metallic nickel content was 72.6%, and an aluminum content of 19.563% by weight. Further, it was confirmed that the porous catalyst body comprised metallic nickel particles having a particle diameter of 8.6 nm, and had an average crushing strength of 240 N (= 24.5 kgf) and a displacement length of 0.16 mm.

<Reaction Using Porous Catalyst Body for Decomposing Hydrocarbons>

The performance of the obtained porous catalyst body for decomposing hydrocarbons was evaluated as follows. That is, 10 to 50 g of the porous catalyst body were filled in a stainless steel reaction tube having a diameter of 20 mm to prepare a catalyst-filled tube. A raw material gas and steam were flowed through the catalyst-filled tube (reactor) to evaluate a catalyst performance of the porous catalyst body.

The DSS operation was performed by adopting the following start-up method, stationary operation and shut-down method.

Start-up method: Heating was initiated from room temperature, and flowing of steam through the reaction tube was initiated at 250°C, whereas flowing of a city gas (13A) therethrough was initiated at 350°C.

Stationary operation: Held at 700°C for 1 hr (the evaluation for a performance of the catalyst was conducted).

Shut-down method: While flowing steam and a city gas (13A), the temperature was dropped to 300°C at which flowing of the steam and the city gas (13A) through the reaction tube was stopped. Then, after the temperature was dropped below 100°C, a reformed gas remaining inside of the reaction tube was removed by flowing a city gas (13A) therethrough.

The rate of occurrence of cracks on catalyst was calculated from the following calculation formula.

$$\text{Rate of occurrence of cracks on catalyst} = 100 \times (\text{weight of catalyst after evaluation})/(\text{weight of catalyst before evaluation})$$

Since $C_2$ or more hydrocarbons were decomposed into methane, CO, $CO_2$ and $H_2$, the catalyst performance was evaluated using a $C_n$ conversion rate (conversion rate of whole hydrocarbons). Also, when using a city gas (13A) as the raw material gas, the conversion rate of the $C_2$ or more hydrocarbons (including ethane, propane, butane and pentane, etc.) in the raw material gas was calculated as a conversion rate of the city gas (13A).

Example) In the case where propane was used as the raw material gas:

$$\text{Conversion Rate of Propane} = 100 \times (CO + CO_2 + CH_4 + C_2H_6)/(CO + CO_2 + CH_4 + C_2H_6 + C_3H_8)$$

$$C_n \text{ Conversion Rate (Conversion Rate of Whole Hydrocarbons)} = (CO + CO_2)/(CO + CO_2 + CH_4 + C_2H_6 + C_3H_8)$$

In Table 1, there is shown the relationship between a reaction temperature, a 13A conversion rate, amounts of carbon deposited before and after measurement of catalyst performance and an average crushing strength when the reaction was conducted using a city gas (13A) as the raw material gas under the conditions including a space velocity (GHSV) of 3000 $h^{-1}$, a temperature of 700°C and a molar ratio of steam to carbon (S/C) of 1.5.

In Table 2, there are shown a 13A conversion rate, amounts of carbon deposited, an average crushing strength and a rate of occurrence of cracks on catalyst when the DSS operation was performed using a city gas (13A) as the raw material gas under the evaluation conditions including a space velocity (GHSV) of 1000 $h^{-1}$, a reaction temperature of 700°C and a molar ratio of steam to carbon (S/C) of 3.0.

Example 2

$Mg(NO_3)_2 \cdot 6H_2O$, $Al(NO_3)_3 \cdot 9H_2O$ and $Ni(NO_3)_2 \cdot 6H_2O$ were weighed in amounts of 3355.4 g, 2134.4 g and 2481.7 g, respectively, and dissolved in pure water to prepare 20000 mL of a mixed solution thereof. Separately, 6241 mL of an NaOH solution (concentration: 14 mol/L) were mixed with a solution in which 844.3 g of $Na_2CO_3$ were dissolved, to prepare 15000 mL of an alkali mixed solution. Then, the thus prepared alkali mixed solution was mixed with the mixed solution comprising the above magnesium salt, aluminum salt and nickel salt, and the resulting solution was aged at 60°C for 6 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 125.0 $m^2/g$, and the secondary agglomerated particles thereof obtained after subjecting the hydrotalcite compound to the pulverization treatment had an average particle diameter of 15.2 μm.

<Production of Porous Catalyst Body for Decomposing Hydrocarbons>

Next, 2495.6 g of the thus obtained hydrotalcite compound particles were mixed with 124.8 g of aluminum hydroxide (crystal phase: boehmite; BET specific surface area: 0.7 $m^2/g$), 235.8 g of ethyl cellulose, 748.9 g of water and 1247.8 g of ethylene glycol, and the resulting mixture was kneaded using a screw kneader for 5 hr. The thus obtained clayey kneaded material was formed into a spherical shape by a compression molding method, and the resulting spherical molded product was dried at 105°C and calcined at 1280°C for 12 hr, thereby obtaining a porous oxide molded product. Thereafter, the thus obtained porous oxide molded product was subjected to reduction treatment at 880°C in a gas flow comprising hydrogen and argon at a mixing volume ratio of 50/50 for 6 hr, thereby obtaining a porous catalyst body for decomposing hydrocarbons. As a result, it was confirmed that the resulting 3.5 mmφ porous catalyst body for decomposing hydrocarbons had a nickel content of 28.897% by weight among which a metallic nickel content was 42.1%, and an aluminum content of 21.520% by weight. Further, it was confirmed that the porous catalyst body comprised metallic nickel particles having a particle diameter of 23.6 nm, and had an average crushing strength of 372 N (= 38.5 kgf) and a displacement length of 0.11 mm.

Example 3

$Ca(NO_3)_2$, $Al(NO_3)_3 \cdot 9H_2O$ and $Ni(NO_3)_2 \cdot 6H_2O$ were weighed in amounts of 1827.7 g, 949.5 g and 1177.7 g, respectively, and dissolved in pure water to prepare 28000 mL of a mixed solution thereof. Separately, 3854 mL of an NaOH solution (concentration: 14 mol/L) were mixed with a solution in which 375.6 g of $Na_2CO_3$ were dissolved, to prepare 12000 mL of an alkali mixed solution. Then, the thus prepared alkali mixed solution was mixed with the mixed solution comprising the above calcium salt, aluminum salt and nickel salt, and the resulting solution was aged at 80°C for 12 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 88.5 $m^2/g$, and the secondary agglomerated particles thereof obtained after subjecting the hydrotalcite compound to the pulverization treatment had an average particle diameter of 122.8 μm.

<Production of Porous Catalyst Body for Decomposing Hydrocarbons>

Next, 1531.4 g of the thus obtained hydrotalcite compound particles were mixed with 581.9 g of aluminum hydroxide (crystal phase: boehmite; BET specific surface area: 22.2 $m^2/g$), 52.83 g of starch, 76.57 g of water and 1255.7 g of propylene glycol, and the resulting mixture was kneaded using a screw kneader for 4 hr. The thus obtained clayey kneaded material was formed into a spherical shape by a tablet molding method, and the resulting spherical molded product was dried at 105°C and calcined at 1080°C for 6 hr, thereby obtaining a porous oxide molded product. Thereafter, the thus obtained porous oxide molded product was subjected to reduction treatment at 820°C in a gas flow comprising hydrogen and argon at a mixing volume ratio of 40/60 for 8 hr, thereby obtaining a porous catalyst body for decomposing hydrocarbons. As a result, it was confirmed that the resulting 5.2 mmφ porous catalyst body for decomposing hydrocarbons had a nickel content of 26.107% by weight among which a metallic nickel content was 55.2%, and an aluminum content of 21.520% by weight. Further, it was confirmed that the porous catalyst body comprised metallic nickel particles having a particle diameter of 15.2 nm, and had an average crushing strength of 162 N (= 16.5 kgf) and a displacement length of 0.09 mm.

Example 4: <Production of Hydrotalcite Compound Particles>

$MgSO_4 \cdot 7H_2O$, $Al_2(SO_4)_3 \cdot 8H_2O$, $NiSO_4 \cdot 6H_2O$ and a Ru nitrate solution (51 g/L) were weighed in amounts of 873.6 g, 861.9 g, 186.4 g and 436.4 g, respectively, and dissolved in pure water to prepare 5000 mL of a mixed solution thereof. Separately, 3010 mL of an NaOH solution (concentration: 14 mol/L) were mixed with a solution in which 263.1

g of $Na_2CO_3$ were dissolved, to prepare 10000 mL of an alkali mixed solution. Then, the thus prepared alkali mixed solution was mixed with the mixed solution comprising the above magnesium salt, aluminum salt, nickel salt and ruthenium salt, and the resulting solution was aged at 125°C for 8 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 16.5 $m^2$/g, and the secondary agglomerated particles thereof obtained after subjecting the hydrotalcite compound to the pulverization treatment had an average particle diameter of 32.5 $\mu$m.

<Production of Porous Catalyst Body for Decomposing Hydrocarbons>

Next, 589.8 g of the thus obtained hydrotalcite compound particles were mixed with 353.9 g of aluminum hydroxide (crystal phase: gibbsite; BET specific surface area: 58.2 $m^2$/g), 38.05 g of methyl cellulose, 58.99 g of water and 421.9 g of diethylene glycol, and the resulting mixture was kneaded using a screw kneader for 3 hr. The thus obtained clayey kneaded material was formed into a cylindrical shape by an extrusion molding method, and the resulting cylindrical molded product was dried at 105°C and calcined at 880°C for 10 hr, thereby obtaining a porous oxide molded product. Thereafter, the thus obtained porous oxide molded product was subjected to reduction treatment at 750°C in a gas flow comprising hydrogen and argon at a mixing volume ratio of 95/5 for 3 hr, thereby obtaining a porous catalyst body for decomposing hydrocarbons. As a result, it was confirmed that the resulting 4.1 mm$\phi$ porous catalyst body for decomposing hydrocarbons had a nickel content of 5.942% by weight among which a metallic nickel content was 62.8%, and an aluminum content of 37.283% by weight. Further, it was confirmed that the porous catalyst body comprised metallic nickel particles having a particle diameter of 5.2 nm, and had an average crushing strength of 67 N (= 6.8 kgf) and a displacement length of 0.06 mm.

Example 5

$Mg(NO_3)_2 \cdot 6H_2O$, $Al(NO_3)_3 \cdot 9H_2O$, $Ni(NO_3)_2 \cdot 6H_2O$ and $ZrO(NO_3)_2 \cdot 2H_2O$ were weighed in amounts of 1187.9 g, 482.8 g, 516.4 g and 68.79 g, respectively, and dissolved in pure water to prepare 7000 mL of a mixed solution thereof. Separately, 2254 mL of an NaOH solution (concentration: 14 mol/L) were mixed with a solution in which 190.9 g of $Na_2CO_3$ were dissolved, to prepare 15000 mL of an alkali mixed solution. Then, the thus prepared alkali mixed solution was mixed with the mixed solution comprising the above magnesium salt, aluminum salt, nickel salt and zirconium salt, and the resulting solution was aged at 165°C for 6 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 12.2 $m^2$/g, and the secondary agglomerated particles thereof obtained after subjecting the hydrotalcite compound to the pulverization treatment had an average particle diameter of 84.5 $\mu$m.

<Production of Porous Catalyst Body for Decomposing Hydrocarbons>

Next, 698.8 g of the thus obtained hydrotalcite compound particles were mixed with 124.8 g of aluminum hydroxide (crystal phase: bayerite; BET specific surface area: 86.5 $m^2$/g), 25.15 g of PVA, 167.7 g of water and 370.4 g of ethylene glycol, and the resulting mixture was kneaded using a screw kneader for 5 hr. The thus obtained clayey kneaded material was formed into a spherical shape by a compression molding method, and the resulting spherical molded product was dried at 105°C and calcined at 1150°C for 2 hr, thereby obtaining a porous oxide molded product. Thereafter, the thus obtained porous oxide molded product was subjected to reduction treatment at 815°C in a gas flow comprising hydrogen and argon at a mixing volume ratio of 30/70 for 6 hr, thereby obtaining a porous catalyst body for decomposing hydrocarbons. As a result, it was confirmed that the resulting 2.2 mm$\phi$ porous catalyst body for decomposing hydrocarbons had a nickel content of 22.276% by weight among which a metallic nickel content was 48.5%, and an aluminum content of 16.421% by weight. Further, it was confirmed that the porous catalyst body comprised metallic nickel particles having a particle diameter of 11.5 nm, and had an average crushing strength of 180 N (= 18.4 kgf) and a displacement length of 0.07 mm.

Example 6

Rh was sprayed and supported on the 3.2 mm$\phi$ porous oxide molded product produced in the same manner as defined in Example 1 such that the amount of Rh supported was 3.455% by weight in terms of metallic Rh. After dried, the resulting product was subjected to calcination treatment at 250°C for 3 hr. Thereafter, the calcined product was subjected to reduction treatment at 805°C in a gas flow comprising 100% of hydrogen for 1.5 hr, thereby obtaining a porous catalyst body for decomposing hydrocarbons. As a result, it was confirmed that the resulting porous catalyst body for decomposing hydrocarbons had a nickel content of 16.710% by weight among which a metallic nickel content was 73.6%, an aluminum content of 18.887% by weight and a rhodium content of 3.451% by weight. Further, it was confirmed that the porous catalyst body comprised metallic nickel particles having a particle diameter of 6.7 nm, and had an average crushing strength of 243 N (= 24.8 kgf) and a displacement length of 0.16 mm.

Comparative Example 1

The calcined molded product obtained in Example 1 was subjected to reduction treatment at 945°C in a gas flow comprising hydrogen and argon at a mixing volume ratio of 95/5 for 8 hr, thereby obtaining a porous catalyst body for decomposing hydrocarbons. As a result, it was confirmed that the resulting 3.4 mm$\phi$ porous catalyst body for decomposing hydrocarbons had a nickel content of 17.308% by weight among which a metallic nickel content was 89.5%, and an aluminum content of 19.413% by weight. Further, it was confirmed that the porous catalyst body comprised metallic nickel particles having a particle diameter of 42.1 nm, and had an average crushing strength of 227 N (= 23.2 kgf) and a displacement length of 0.03 mm.

Comparative Example 2: <Production of Hydrotalcite Compound Particles>

$MgSO_4 \cdot 7H_2O$, $Al_2(SO_4)_3 \cdot 8H_2O$ and $NiSO_4 \cdot 6H_2O$ were weighed in amounts of 956.9 g, 236.0 g and 38.28 g, respectively, and dissolved in pure water to prepare 4000 mL of a mixed solution thereof. Separately, 2041 mL of an NaOH solution (concentration: 14 mol/L) were mixed with a solution in which 72.04 g of $Na_2CO_3$ were dissolved, to prepare 16000 mL of an alkali mixed solution. Then, the thus prepared alkali mixed solution was mixed with the mixed solution comprising the above magnesium salt, aluminum salt and nickel salt, and the resulting solution was aged at 105°C for 11 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 21.5 $m^2/g$, and the secondary agglomerated particles thereof obtained after subjecting the hydrotalcite compound to the pulverization treatment had an average particle diameter of 52.2 $\mu$m.

<Production of Porous Catalyst Body for Decomposing Hydrocarbons>

Next, 378.1 g of the thus obtained hydrotalcite compound particles were mixed with 3.781 g of aluminum hydroxide (crystal phase: boehmite; BET specific surface area: 110.6 $m^2/g$) , 43.29 g of PVA, 79.41 g of water and 245.8 g of ethylene glycol, and the resulting mixture was kneaded using a screw kneader for 5 hr. The thus obtained clayey kneaded material was formed into a spherical shape by a compression molding method, and the resulting spherical molded product was dried at 105°C and calcined at 1100°C for 3 hr, thereby obtaining a porous oxide molded product. Thereafter, the thus obtained porous oxide molded product was subjected to reduction treatment at 850°C in a gas flow comprising hydrogen and argon at mixing volume ratio of 95/5 for 7 hr, thereby obtaining a porous catalyst body for decomposing hydrocarbons. As a result, it was confirmed that the resulting 4.5 mm$\phi$ porous catalyst body for decomposing hydrocarbons had a nickel content of 3.922% by weight among which a metallic nickel content was 35.2%, and an aluminum content of 12.832% by weight. Further, it was confirmed that the porous catalyst body comprised metallic nickel particles having a particle diameter of 4.1 nm, and had an average crushing strength of 138 N (= 14.1 kgf) and a displacement length of 0.02 mm.

Comparative Example 3: <Production of Porous Catalyst Body for Decomposing Hydrocarbons>

The hydrotalcite compound particles obtained in Example 1 in an amount of 567.2 g were mixed with 5.672 g of titanium oxide (crystal phase: anatase; BET specific surface area: 85.2 $m^2/g$), 64.94 g of PVA, 119.1 g of water and 368.7 g of ethylene glycol, and the resulting mixture was kneaded using a screw kneader for 3 hr. The thus obtained clayey kneaded material was formed into a spherical shape by a compression molding method, and the resulting spherical molded product was dried at 105°C and calcined at 1150°C for 4 hr, thereby obtaining a porous oxide molded product. Thereafter, the thus obtained porous oxide molded product was subjected to reduction treatment at 790°C in a gas flow comprising hydrogen and argon at mixing volume ratio of 75/25 for 3 hr, thereby obtaining a porous catalyst body for decomposing hydrocarbons. As a result, it was confirmed that the resulting 3.8 mm$\phi$ porous catalyst body for decomposing hydrocarbons had a nickel content of 19.520% by weight among which a metallic nickel content was 59.2%, and an aluminum content of 13.805% by weight. Further, it was confirmed that the porous catalyst body comprised metallic nickel particles having a particle diameter of 7.8 nm, and had an average crushing strength of 41 N (= 4.2 kgf) and a displacement length of 0.01 mm.

Comparative Example 4: <Production of Porous Catalyst Body for Decomposing Hydrocarbons >

Gamma (γ)-alumina in an amount of 623.9 g were mixed with 218.4 g of aluminum hydroxide (crystal phase: boehmite; BET specific surface area: 110.6 m$^2$/g), 71.44 g of PVA, 131.0 g of water and 405.6 g of ethylene glycol, and the resulting mixture was kneaded using a screw kneader for 5 hr. The thus obtained clayey kneaded material was formed into a spherical shape by a compression molding method, and the resulting spherical molded product was dried at 105°C and calcined at 1420°C for 1 hr, thereby obtaining a molded product having a diameter of 3.6 mmφ. Ni nitrate was adsorbed onto the thus obtained molded product by an impregnating method, and the resulting molded product was calcined at 550°C for 3 hr.

Thereafter, the thus calcined product was subjected to reduction treatment at 810°C in a gas flow comprising hydrogen and argon at mixing volume ratio of 42/58 for 3 hr, thereby obtaining a porous catalyst body for decomposing hydrocarbons. As a result, it was confirmed that the resulting porous catalyst body for decomposing hydrocarbons had a nickel content of 11.097% by weight among which a metallic nickel content was 92.1%, and an aluminum content of 47.006% by weight. Further, it was confirmed that the porous catalyst body comprised metallic nickel particles having a particle diameter of 46.8 nm, and had an average crushing strength of 87 N (= 8.9 kgf) and a displacement length of 0.03 mm.

Table 1

| Examples | Reaction time (h) | S/C=3.0 13A conversion rate (%) | Amount of carbon deposited (wt%) | Average crushing strength |
|---|---|---|---|---|
| Example 1 | 12 | 97.28 | 0 | 240N (=24.5kgf) |
|  | 200 | 97.27 | 0 | 241 N (= 24.6 kgf) |
|  | 300 | 97.28 | 0 | 238 N (= 24.3 kgf) |
| Example 2 | 12 | 97.28 | 0 | 377N (=38.5kgf) |
|  | 100 | 97.28 | 0.01 | 367 N (= 37.4 kgf) |
|  | 200 | 97.28 | 0.01 | 370 N (= 37.8 kgf) |
| Example 3 | 12 | 97.27 | 0 | 162 N (= 16.5 kgf) |
|  | 100 | 97.28 | 0 | 159 N (= 16.2 kgf) |
|  | 200 | 97.28 | 0 | 160N (=16.3kgf) |
| Example 4 | 12 | 97.26 | 0.01 | 67 N (=6.8 kgf) |
|  | 100 | 97.25 | 0.1 | 64 N (= 6.5 kgf) |
|  | 200 | 97.28 | 0.02 | 66 N (= 6.7 kgf) |
| Example 5 | 12 | 97.26 | 0 | 180 N (= 18.4 kgf) |
|  | 100 | 97.28 | 0 | 178 N (= 18.2 kgf) |
|  | 200 | 97.27 | 0 | 177 N (= 18.1 kgf) |
| Example 6 | 12 | 97.26 | 0 | 240 N (= 24.5 kgf) |
|  | 100 | 97.26 | 0 | 240 N (= 24.5 kgf) |
|  | 200 | 97.28 | 0 | 238 N (= 24.3 kgf) |
| Comp. Examples | Reaction time (h) | S/C=3.0 13A conversion rate (%) | Amount of carbon deposited (wt%) | Average crushing strength |
| Comp. Example 1 | 12 | 97.25 | 1.01 | 227 N (= 23.2 kgf) |
|  | 100 | 93.24 | 3.26 | 226 N (= 23.1 kgf) |
|  | 200 | 85.26 | 8.61 | 224 N (= 22.9 kgf) |
| Comp. Example 2 | 12 | 64.25 | 0.52 | 138 N (= 14.1 kgf) |
|  | 100 | 58.15 | 1.15 | 114 N (= 11.6 kgf) |
|  | 200 | 41.17 | 2.32 | 73 N (= 7.4 kgf) |

(continued)

| Comp. Examples | Reaction time (h) | S/C=3.0 13A conversion rate (%) | Amount of carbon deposited (wt%) | Average crushing strength |
|---|---|---|---|---|
| Comp. Example 3 | 12 | 97.23 | 0.08 | 41 N (= 4.2 kgf) |
| | 100 | 96.18 | 2.29 | 25 N (= 2.5 kgf) |
| | 200 | 93.26 | 5.34 | 11 N (= 1.1 kgf) |
| Comp. Example 4 | 12 | 97.16 | 0.52 | 87 N (= 8.9 kgf) |
| | 100 | 83.26 | 3.16 | 73 N (= 7.4 kgf) |
| | 200 | 76.21 | 6.82 | 61 N (= 6.2 kgf) |

Table 2

| Examples | Frequency of DSS (-) | S/C=3.0 13A conversion rate (%) | Amount of carbon deposited (wt%) | Average crushing strength (kgf) | Rate of occurrence of cracks (%) |
|---|---|---|---|---|---|
| Example 1 | 10 | 97.28 | 0 | 240 N (= 24.5 kgf) | 0 |
| | 100 | 97.28 | 0 | 242 N (= 24.7 kgf) | 0 |
| | 400 | 97.27 | 0 | 238 N (= 24.3 kgf) | 0.1 |
| Example 2 | 10 | 97.27 | 0 | 376 N (= 38.4 kgf) | 0 |
| | 100 | 97.27 | 0 | 371 N (= 37.9 kgf) | 0 |
| | 400 | 97.28 | 0.01 | 373 N (= 38.1 kgf) | 0 |
| Example 3 | 10 | 97.28 | 0 | 162 N (= 16.5 kgf) | 0 |
| | 100 | 97.26 | 0 | 159 N (= 16.2 kgf) | 0 |
| | 400 | 97.25 | 0.02 | 166 N (= 16.9 kgf) | 0 |
| Example 4 | 10 | 97.28 | 0 | 66 N (= 6.7 kgf) | 0 |
| | 100 | 97.26 | 0.01 | 68 N (= 6.9 kgf) | 0 |
| | 400 | 97.27 | 0.01 | 65 N (= 6.6 kgf) | 0.2 |
| Example 5 | 10 | 97.28 | 0 | 178 N (= 18.2 kgf) | 0 |
| | 100 | 97.25 | 0 | 180 N (= 18.4 kgf) | 0 |
| | 400 | 97.26 | 0 | 181 N (= 18.5 kgf) | 0.5 |
| Example 6 | 10 | 97.25 | 0 | 240 N (= 24.5 kgf) | 0 |
| | 100 | 97.26 | 0 | 241 N (= 24.6 kgf) | 0 |
| | 400 | 97.27 | 0 | 237 N (= 24.2 kgf) | 0 |
| Comp. Examples | Frequency of DSS (-) | S/C=3.0 13A conversion rate (%) | Amount of carbon deposited (wt%) | Average crushing strength | Rate of occurrence of cracks (%) |
| Comp. Example 1 | 10 | 97.25 | 0.95 | 227 N (= 23.2 kgf) | 0 |
| | 100 | 94.15 | 4.15 | 224 N (= 22.9 kgf) | 1.5 |
| | 400 | 86.21 | 9.21 | 210 N (= 21.4 kgf) | 3.2 |
| Comp. Example 2 | 10 | 65.28 | 0.48 | 139 N (= 14.2 kgf) | 32.2 |
| | 100 | 45.69 | 1.62 | 96 N (= 9.8 kgf) | 45.2 |
| | 400 | 21.14 | 3.18 | 51 N (= 5.2 kgf) | 65.8 |

(continued)

| Comp. Examples | Frequency of DSS (-) | S/C=3.0 13A conversion rate (%) | Amount of carbon deposited (wt%) | Average crushing strength | Rate of occurrence of cracks (%) |
|---|---|---|---|---|---|
| Comp. Example 3 | 10 | 97.26 | 0.02 | 40 N (= 4.1 kgf) | 28.2 |
| | 100 | 95.15 | 3.16 | 21 N (= 2.1 kgf) | 34.6 |
| | 400 | 91.19 | 6.38 | 8 N (= 0.8 kgf) | 52.1 |
| Comp. Example 4 | 10 | 97.21 | 0.24 | 86 N (= 8.8 kgf) | 21.2 |
| | 100 | 82.21 | 4.25 | 51 N (= 5.2 kgf) | 31.6 |
| | 400 | 73.15 | 8.29 | 25 N (= 2.5 kgf) | 48.5 |

INDUSTRIAL APPLICABILITY

The porous catalyst body for decomposing hydrocarbons according to the present invention comprises metallic nickel in the form of very fine particles. For this reason, since the metallic nickel as an active metal species has an increased contact area with steam, the porous catalyst body of the present invention can exhibit an excellent catalytic activity.

In addition, the porous catalyst body for decomposing hydrocarbons according to the present invention also has a large displacement length. For this reason, even when the catalyst layer is densely compacted owing to repeated expansion/contraction and swelling of the reactor during DSS operation, the porous catalyst body of the present invention can act for relaxing a pressure applied thereto by itself and therefore can maintain an excellent catalytic activity without occurrence of breakage and powdering.

**Claims**

1. A porous catalyst body for decomposing hydrocarbons, comprising a porous composite oxide comprising at least magnesium and/or calcium, and aluminum, and metallic nickel having a particle diameter of 1 to 25 nm, which porous catalyst body has an average crushing strength of not less than 49 N (= 5 kgf) and a displacement length of not less than 0.05 mm as measured by compressing the porous catalyst body under a load of 49 N (= 5 kgf), wherein a content of aluminum in the porous catalyst body is 15 to 45% by weight, a nickel content in the porous catalyst body is 5 to 30% by weight in terms of metallic nickel, and a content of the metallic nickel is 40 to 75% by weight based on a total nickel content in the porous catalyst body.

2. A porous catalyst body for decomposing hydrocarbons according to claim 1, further comprising at least one element selected from the group consisting of an alkali metal element, an alkali earth metal element, a rare earth element and a noble metal element.

3. A porous catalyst body for decomposing hydrocarbons according to either claim 1 or claim 2 which has a spherical shape and a diameter of 1 to 10mm.

4. A porous catalyst body for decomposing hydrocarbons according to either claim 1 or claim 2 which is formed into a honeycomb structure.

5. A process for producing the porous catalyst body for decomposing hydrocarbons as defined in any one of claims 1 to 4, comprising the steps of:

    mixing hydrotalcite compound particles comprising at least magnesium and/or calcium, nickel and aluminum with aluminum hydroxide;
    molding the resulting mixture; and
    subjecting the molded product to calcination and reduction treatment.

6. A process according to claim 5 wherein the hydrotalcite compound particles have:

    (a) an average plate surface diameter of 0.05 to 0.4 $\mu$m; and/or

(b) a crystallite size D006 of 0.001 to 0.08 $\mu$m; and/or
(c) a diameter of secondary agglomerated particles of 0.1 to 200 $\mu$m.

7. A process according to either claim 5 or claim 6 wherein the hydrotalcite compound particles have a BET specific surface area of 3.0 to 300 m$^2$/g.

8. A process according to any one of claims 5 to 7 wherein the calcination treatment is carried out at a temperature of 700 to 1500°C.

9. A process according to any one of claims 5 to 8 wherein the calcination time is from 1 to 72 hours.

10. A process according to any one of claims 5 to 9 wherein the reduction treatment is carried out at a temperature of 600 to 900°C.

11. A process for producing a mixed reformed gas comprising hydrogen from hydrocarbons, comprising the step of reacting the hydrocarbons with steam at a temperature of 250 to 850°C, at a molar ratio of steam to carbon (S/C) of 1.0 to 6.0 and at a space velocity (GHSV) of 100 to 100000 h$^{-1}$ by using the porous catalyst body for decomposing hydrocarbons as defined in any one of claims 1 to 4.

12. A fuel cell system comprising the porous catalyst body for decomposing hydrocarbons as defined in any one of claims 1 to 4.

13. A fuel cell system according to claim 12 which has a daily start-up and shutdown operation.

## Patentansprüche

1. Poröser Katalysatorkörper zum Abbauen von Kohlenwasserstoffen, umfassend ein poröses Verbundoxid umfassend mindestens Magnesium und/oder Calcium, und Aluminium, und metallisches Nickel mit einem Partikeldurchmesser von 1 bis 25 nm, wobei der poröse Katalysatorkörper eine durchschnittliche Druckfestigkeit von nicht weniger als 49 N (= 5 kgf) und eine Verdrängungslänge von nicht weniger als 0,05 mm aufweist, gemessen durch Komprimieren des porösen Katalysatorkörpers unter einer Last von 49 N (= 5 kgf), wobei ein Gehalt an Aluminium in dem porösen Katalysatorkörper 15 bis 45 Gew.-% ist, ein Nickelgehalt in dem porösen Katalysatorkörper 5 bis 30 Gew.-% in Bezug auf metallisches Nickel ist, und ein Gehalt des metallischen Nickels 40 bis 75 Gew.-% beruhend auf dem gesamten Nickelgehalt in dem porösen Katalysatorkörper ist.

2. Poröser Katalysatorkörper zum Abbauen von Kohlenwasserstoffen nach Anspruch 1, ferner umfassend mindestens ein Element ausgewählt aus der Gruppe bestehend aus einem Alkalimetallelement, einem Erdalkalimetallelement, einem Seltenerdeelement und einem Edelmetallelement.

3. Poröser Katalysatorkörper zum Abbauen von Kohlenwasserstoffen entweder nach Anspruch 1 oder Anspruch 2, der eine kugelförmige Form und einen Durchmesser von 1 bis 10 mm aufweist.

4. Poröser Katalysatorkörper zum Abbauen von Kohlenwasserstoffen entweder nach Anspruch 1 oder Anspruch 2, der in einer Honigwabenstruktur geformt ist.

5. Verfahren zum Herstellen des porösen Katalysatorkörpers zum Abbauen von Kohlenwasserstoffen, wie definiert in einem der Ansprüche 1 bis 4, umfassend die folgenden Schritte:

   Mischen von Hydrotalkitverbindungspartikeln, umfassend mindestens Magnesium und/oder Calcium, Nickel und Aluminium mit Aluminiumhydroxid;
   Formung des resultierenden Gemischs; und
   Unterziehen des geformten Produkts an Kalzinierungs- und Reduktionsbehandlung.

6. Verfahren nach Anspruch 5, wobei die Hydrotalkitverbindungspartikel Folgendes aufweisen:

   (a) einen durchschnittlichen Plattenoberflächendurchmesser von 0,05 bis 0,4 $\mu$m; und/oder
   (b) eine Kristallitgröße D006 von 0,001 bis 0,08 $\mu$m;

und/oder

(c) einen Durchmesser von sekundären agglomerierten Partikeln von 0,1 bis 200 $\mu$m.

7. Verfahren entweder nach Anspruch 5 oder Anspruch 6, wobei die Hydrotalkitverbindungspartikel eine spezifische BET-Oberfläche von 3,0 bis 300 m$^2$/g aufweisen.

8. Verfahren nach einem der Ansprüche 5 bis 7 wobei die Kalzinierungsbehandlung bei einer Temperatur von 700 bis 1500 °C durchgeführt wird.

9. Verfahren nach einem der Ansprüche 5 bis 8, wobei die Kalzinierungszeit von 1 bis 72 Stunden ist.

10. Verfahren nach einem der Ansprüche 5 bis 9, wobei die Reduktionsbehandlung bei einer Temperatur von 600 bis 900 °C durchgeführt wird.

11. Verfahren zum Herstellen eines gemischten verbesserten Gases, umfassend Wasserstoff, aus Kohlenwasserstoffen, umfassend den Schritt eines Reagierens der Kohlenwasserstoffe mit Dampf bei einer Temperatur von 250 bis 850 °C, mit einem Molverhältnis von Dampf zu Kohlenstoff (steam/carbon, S/C) von 1,0 bis 6,0 und at a Raumgeschwindigkeit (GHSV) von 100 bis 100000 h$^{-1}$ unter Verwendung des porösen Katalysatorkörpers zum Abbauen von Kohlenwasserstoffen, wie definiert in einem der Ansprüche 1 bis 4.

12. Brennstoffzellensystem umfassend den porösen Katalysatorkörper zum Abbauen von Kohlenwasserstoffen, wie definiert in einem der Ansprüche 1 bis 4.

13. Brennstoffzellensystem nach Anspruch 12, das einen täglichen Hoch- und Herunterfahrvorgang aufweist.


**Revendications**

1. Corps de catalyseur poreux de décomposition d'hydrocarbures, comportant un oxyde de composite poreux comprenant au moins du magnésium et/ou du calcium, ainsi que de l'aluminium et du nickel métallique présentant un diamètre de particule de 1 à 25 nm, dont le corps de catalyseur poreux a une résistance à l'écrasement d'au moins 49 N (=5 kgf) et une longueur de déplacement d'au moins 0,05 mm, telles que mesurées par la compression du corps de catalyseur poreux sous une charge de 49 N (= 5 kgf), dans lequel la teneur en aluminium dans le corps de catalyseur poreux est de 15 à 45 % en poids, la teneur en nickel dans le corps de catalyseur poreux est de 5 à 30 % en poids en termes de nickel métallique, et la teneur en nickel métallique est de 40 à 75 % en poids sur la base de la teneur totale de nickel présente dans le corps de catalyseur poreux.

2. Corps de catalyseur poreux de décomposition des hydrocarbures selon la revendication 1, comprenant en outre au moins un élément sélectionné à partir du groupe composé d'un élément de métaux alcalins, d'un élément de métaux alcalino-terreux, d'un élément terreux rare et d'un élément métallique noble.

3. Corps de catalyseur poreux de décomposition d'hydrocarbures selon la revendication 1 ou la revendication 2, présentant une forme sphérique et un diamètre de 1 à 10 mm.

4. Corps de catalyseur poreux de décomposition d'hydrocarbures selon la revendication 1 ou la revendication 2, formé en une structure de nid d'abeilles.

5. Processus de production du corps de catalyseur poreux de décomposition d'hydrocarbures comme défini dans l'une quelconque des revendications 1 à 4, comprenant les étapes de :

mélange des particules de composé hydrotalcite comportant au moins du magnésium et/ou du calcium, du nickel et de l'aluminium avec de l'hydroxyde d'aluminium ;
moulage du mélange obtenu ; et
soumission du produit moulé à un traitement de calcination et de réduction.

6. Processus selon la revendication 5, dans lequel les particules de composé hydrotalcite présentent :

(a) un diamètre de surface plane moyen de 0,05 à 0,4 $\mu$m ; et/ou

(b) une taille de cristallite D006 de 0,001 à 0,08 $\mu$m ; et/ou

(c) un diamètre de particules agglomérées secondaires de 0,1 à 200 $\mu$m.

**7.** Processus selon la revendication 5 ou la revendication 6, dans lequel les particules de composé hydrotalcite présentent une surface spécifique BET de 3,0 à 300 m$^2$/g.

**8.** Processus selon l'une quelconque des revendications 5 à 7, dans lequel le traitement de calcination est effectué à une température allant de 700 à 1 500 °C.

**9.** Processus selon l'une quelconque des revendications 5 à 8, dans lequel la durée de calcination dure de 1 à 72 heures.

**10.** Processus selon l'une quelconque des revendications 5 à 9, dans lequel le traitement de réduction est effectué à une température allant de 600 à 900 °C.

**11.** Processus de production d'un gaz reformé mélangé, comprenant de l'hydrogène provenant des hydrocarbures, comprenant l'étape de réaction des hydrocarbures à de la vapeur, à une température allant de 250 à 850 °C, à un rapport molaire vapeur/carbone (S/C) de 1,0 à 6,0 et à une vitesse spatiale (GHSV) de 100 à 100 000 h$^{-1}$ par l'utilisation du corps de catalyseur poreux de décomposition des hydrocarbures comme défini dans l'une quelconque des revendications 1 à 4.

**12.** Système de piles à combustible comprenant le corps de catalyseur poreux de décomposition des hydrocarbures comme défini dans l'une quelconque des revendications 1 à 4.

**13.** Système de piles à combustible selon la revendication 12 comportant une opération de démarrage et d'arrêt journalière.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9173842 A
- JP 2000503624 A
- JP 2003135967 A
- JP 2001146406 A
- JP 2004082034 A
- WO 2008049266 A1
- WO 2009011133 A1
- WO 2009084736 A1
- WO 2008012255 A2